# EUROPEAN PATENT APPLICATION

(11) **EP 1 475 546 A2**
(43) Date of publication of application: **10.11.2004**
(21) Application number: 04011049.6
(22) Date of filing: 10.05.2004
(51) Int. Cl.: F16C 1/26

(54) **Sheated cable**

(30) Priority: 08.05.2003 DE 10320677
(71) Applicant: FICO CABLES, LDA, 4471 Maia (PT)
(72) Inventor: Da Silva Lopes, Pedro Joao, 4470-263 Vermoim Maia (PT)
(74) Representative: Hess, Peter K., Dipl.-Phys.

(57) **Abstract**

The present invention relates to a sheathed cable system, in particular a bowden cable system, which is used for the transmission of push and pull forces and of displacements preferably in motor vehicles. This sheathed cable system comprises a cable 10, a cable guiding having a support structure 30 for receiving said cable 10 wherein said support structure 30 comprises adjacent ring-shaped elements 40 the faces 42 of which directly contact each other to transmit forces in the axial direction of the cable 10.

## Description

### 1. Field of the invention

The present invention relates to a sheathed cable system, in particular a bowden cable system, which serves for the transmission of push and pull forces and displacements preferably in motor vehicles.

### 2. Background of the invention

The present invention relates to a sheathed cable system comprising a cable and a supporting structure. Such systems are for example known as bowden cables. They serve for the transmission of forces by executing a relative movement between the cable and the support structure. These forces comprise on the one hand pull forces and on the other hand push forces. The transmission of the forces is enabled in such a way that a supporting at the support structure is realized in order to displace the cable in the desired direction. In this manner, the above mentioned relative movement between the cable and the support structure is generated. Therefore, the support structure provides an opposed force to the force to be transmitted by the cable.

It is a further function of the support structure to retain the cable and to protect the same from environmental physical and chemical influences.

The mentioned sheathed cable systems are for example used for the actuation of brakes, flaps or levers preferably in motor vehicles. Machines of all kinds or also bicycles, as used in every day life, are other application fields. The advantage of these sheathed cable systems consist in their flexibility so that they can be installed along desired ways. Thus, also a force transmission via desired ways is possible without using for example lever connections. The flexibility or the installation of the sheathed cable system along desired ways is only limited in such a way that said sheathed cable system has not to be buckled beyond a certain angle since then a jamming of the cable within the support structure takes place. This jamming blocks the movement of the cable whereby neither a relative movement nor the transmission of forces by means of said sheathed cable system is possible.

Known sheathed cable systems are for example described in the US-A-3 238 808 and in the US-A-5 245 887. These prior art documents disclose multi wire cables, mostly made of steel, which are surrounded by the support structure in shape of a spiral spring. This support structure in shape of a spiral spring includes a plurality of turns wherein more or less big spacings are provided between the opposed faces of the single turns, respectively. This spacing between the turns is disadvantageous in view of the function of the sheathed cable system. As for example during the transmission of a pull force via the cable, a support at the support structure is carried out leading to a pressing or a compression of said support structure. Because of this reason, the support structure actually acts like a spiral spring wherein the spacings of the same between the single turns must be closed first before a sufficient opposed force is provided for the transmission of the pull force by means of the cable. By the closing of the spacings between the turns, first of all a certain lost motion is present in the transmission of the pull force by means of the sheathed cable system. Only after the lost motion, the actual or effective supporting at the support structure is carried out as well as the desired actuation of lever or the same. The essential disadvantages of this construction consist, thus, in the loss of time during transmitting the forces of movements, in the loss of energy based on the closing of the spacings between the single turns and in a loss of accuracy since the actual floating or the lost motion of the sheathed cable system cannot be accurately determined in advance.

The technical teaching of the GB-A-2 049 861 tries to eliminate the above mentioned disadvantages. It arranges in a similar sheathed cable system as mentioned above a further spiral shaped element in the spacings of the spiral shaped support structure. This element has a round cross section and it is arranged in notch-like recesses at the faces of the turns of the spiral shaped support structure. The turns of the support structure contact each other via said spiral shaped element as mediator so that the spacings between the single turns are closed and so that a lost motion of the sheathed cable system is prevented.

The essential disadvantage of this construction consists in the fact that it is expensive based on the arrangement of the different elements. The efforts follow on the one hand from the time consuming manufacturing of the single elements and on the other hand from the assembling of the sheathed cable system. Thus, the sheathed cable system of the GB-A-2 049 861 is expensive preventing the use in arbitrary technical fields.

It is therefore the problem of the present invention to provide a sheathed cable system having a simple and cost-effective construction wherein at the same time an optimal transmission of forces and displacements as well as minimal losses of energy are guaranteed.

### 3. Summary of the invention

The above mentioned problem is solved by a sheathed cable system according to the present invention.

The sheathed cable system of the present invention, in particular a bowden cable system, comprises a cable, a cable guiding having a support structure for receiving said cable wherein said support structure comprises adjacent ring-shaped elements wherein the faces of which directly contact each other for transmitting forces in an axial direction of the cable.

The present invention preferably according to the invention comprises a bowden cable system having a cable in connection with a cable guiding. This sheathed cable system serves for the transmission of pull and push forces wherein a support at the cable guiding surrounding said cable is carried out for the transmission of these forces by means of said cable. To enable an optimal support and an optimal energy transmission by means of said sheathed cable, said cable guiding comprises ring-shaped elements wherein the adjacent faces of the same support at each other. Based on the preferred direct contact to each other of said faces of the adjacent ring-shaped elements according to the invention, no spacings between these ring-shaped elements are formed which effect a lost motion of the sheathed cable system. Additionally, it is prevented that said cable guiding and in particular said support structure acts like a spiral spring which first has to be compressed to guarantee an optimal transmission of push or pull forces.

According to a further preferred embodiment of the present invention, an inner cover element is arranged between said cable and said support structure to enhance the compactness of the sheathed cable system.

According to a preferred embodiment of the present invention, said inner cover element is formed by a coating of the cable. According to a further preferred embodiment of the present invention, a coating of the inside of said support structure, that means the side directed to the cable, forms the mentioned inner cover element. By this cover element, dispensable tolerances between the cable and the support structure are reduced. Additionally, said inner cover element guarantees a low friction sliding of the cable within the sheathed cable system according to the invention. A further advantage of the cover element according to the invention consist in the stabilizing effect in view of the support structure. In case the cover element forms an inner coating of said support structure, its ring-shaped elements are retained in position by this cover element so that a lateral shifting or a displacement, for example by bending of the sheathed cable system, is prevented. Therefore, said cover element has a stabilizing effect on the support structure. Furthermore, it assures the function of the sheathed cable system since it prevents a shifting of adjacent ring-shaped elements which can lead to a jamming of the cable within the cable guiding. Such jamming of the cable completely prevents the functioning of the sheathed cable system.

It is furthermore preferred according to the invention that at least one of said ring-shaped elements comprises a recess along its inner circumference at its side directed to the cable.

The above mentioned recess leads to a reduction of the material necessary for the production of the support structure. Besides this material saving, this material reduction also effects that the weight of the sheathed cable system is substantially reduced. In this manner, deformations of the preferred sheathed cable system according to the invention are limited or prevented which are caused by the own weight of the sheathed cable system. Beside the weight reduction, the preferred inner structure of the ring-shaped elements of the support structure according to the invention has the advantage that said inner cover element is anchored in the structure. Preferably according to the invention, said inner cover element is applied as a coating onto the inner side of said ring-shaped elements. The recesses as well as the projections formed by said recess and the faces act like "anchors" guaranteeing reliable fastening of the cover element at the inner side of the ring-shaped elements.

Preferably according to the invention, this recess is formed having an angular or curvilinear cross section.

According to a further preferred embodiment of the present invention, the faces of the adjacent ring shaped elements comprise a curvilinear or a linear shape angularly aligned to each other to effectively contact each other.

The faces of the adjacent ring-shaped elements of the support structure of the preferred sheathed cable system according to the invention are shaped differently. Preferably according to the invention, they either comprise a radial or a linear configuration. Beside these configurations, it is also preferred according to the invention to realize a curvilinear or a gradual linear shape. Based on these shapes, the adjacent ring-shaped elements effectively contact each other or an effective support of the adjacent ring-shaped elements at each other is carried out. This support or contact also realizes that a displacing or a shifting of the ring-shaped elements with respect to each other is prevented whereby for example no jamming of the cable can be realized. By the supporting or effective contacting, a lost motion of the sheathed cable system according to the invention and, thus, losses of energy are prevented and an optimal force or energy transmission is realized having low constructive efforts.

According to a further preferred embodiment of the present invention, said ring-shaped elements are formed by spiral shaped turns made of resilient material.

Preferably according to the invention, the support structure of the sheathed cable system is formed by a spiral shaped element wherein the single spiral shaped turns are the above mentioned ring-shaped elements. The faces of the adjacent spiral shaped turns contact each other in this preferred embodiment according to the invention and they support each other. In this manner, the already above mentioned advantages of the present invention are achieved.

According to a further preferred embodiment of the present invention, said cable guiding further comprises an outer casing adjacent to the outer side of the support structure.

Such a casing is for example made of synthetic resin and it guarantees the resistivity of the sheathed cable system according to the invention in view of environmental chemical and physical attacks. By this means, a durable and reliable sheathed cable system is provided which is of simple construction and which can be manufactured with low cost.

### 4. Description of the accompanying drawings

The preferred embodiments of the present invention are explained with reference to the accompanying drawings. In these drawings, it is shown:
- Fig. 1:: an enlarged schematic illustration of the single elements of the preferred sheathed cable system according to the invention;
- Fig. 2:: a preferred embodiment of the cross section of the preferred spiral shaped turns according to the invention used as ring-shaped elements of the support structure;
- Fig. 3:: a preferred embodiment of the cross section of the preferred spiral shaped turns according to the invention used as ring-shaped elements of the support structure; and
- Fig. 4:: a preferred embodiment of the cross section of the preferred spiral shaped turns according to the invention used as the ring-shaped elements of the support structure.

### 5. Detailed description of the Preferred embodiments

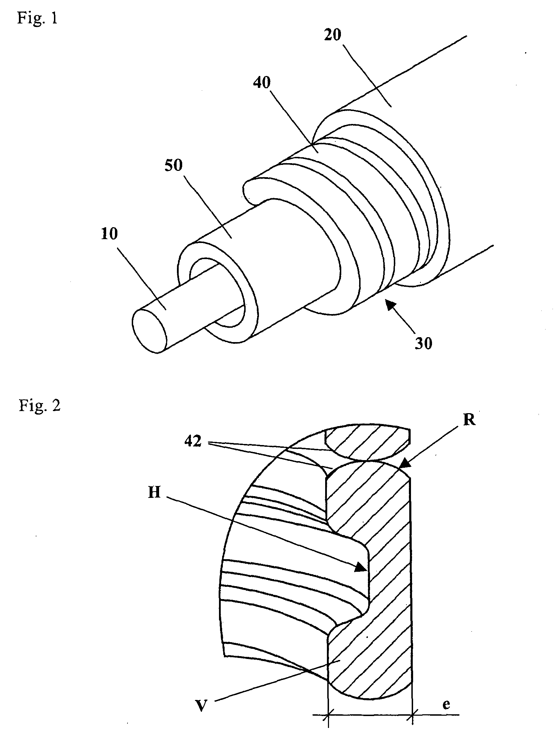

The present invention relates to a sheathed cable system, in particular to a bowden cable system, comprising an inner cable 10, an inner cover element 50, a support structure 30 having preferably according to the invention spiral shaped turns used as ring-shaped elements 40 and an outer casing 20. The sheathed cable system according to the invention is shown in a schematic illustration in Fig. 1.

Preferably according to the invention, the cable 10 is formed by a multi wire cable wherein said wires are mostly made of steel or of another resistant material. This cable 10 is received and guided in a cable guiding having a tube-like structure 30. This tube-like structure also indicated as support structure 30 is formed preferably according to the invention by a spiral shaped winded spool and surrounding the cable 10. It is however also preferred according to the invention to form said support structure 30 by the alignment of several ring-shaped elements 40 connected to each other or not connected to each other. Basically, a tube-like support structure has to be formed by the support structure 30 and the contained spiral shaped turns or ring-shaped elements 40 wherein said tube like support structure must comprise a circular, a four-cornered or a many-cornered cross section to guarantee the function of the sheathed cable system according to the present invention. It is furthermore preferred according to the invention that the above mentioned support structure provides sufficient flexibility to install the sheathed cable system along desired ways.

According to a preferred embodiment of the present invention, the spiral shaped support structure 30 is formed of adjacent turns or generally of adjacent ring-shaped elements 40 which contact each other at their faces 42. Based on this contact or touch, a preferred supporting according to the invention is realized as exemplary shown in the figures 2 to 4.

Pull as well as push forces are transmitted by means of the cable 10 guided within the support structure 30. The transmission of these forces is realized by a supporting at the cable guiding of the sheathed cable system wherein the use of the support structure 30 according to the invention guarantees the stability of the cable guiding of the present invention. Preferably according to the invention, a direct supporting of the spiral shaped turns 40 at each other is carried out during the force transmission by means of the present sheathed cable system since said support structure is provided with no spacings between the preferred spiral shaped turns 40 according to the invention. By the preferred absence according to the invention of the spacings between the adj acent spiral shaped turns 40 also with no acting of an outer loading, losses are prevented during the transmission of movements, forces or energies by means of the sheathed cable system according to the invention. By the direct supporting of the adjacent spiral shaped turns 40 at each other, it is not necessary that firstly a compression of said support structure of the sheathed cable system has to be carried out during the transmission of forces which would effect a certain lost motion of the sheathed cable system. This positive effect is thus effectively achieved by a simple construction.

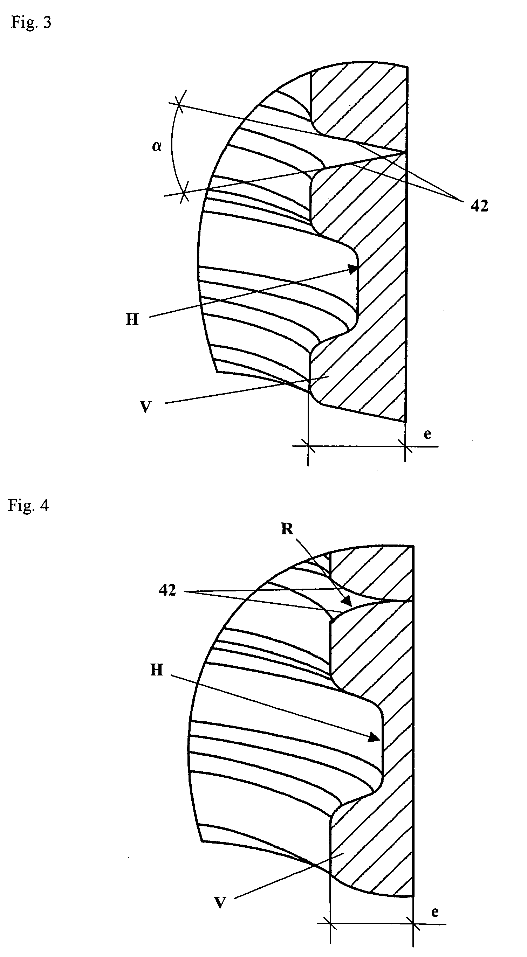

By the contact of the preferred adjacent turns 40 according to the invention via their faces 42 at each other (confer Figs. 2 to 4), a transmission of forces, movements and energies via the sheathed cable system according to the present invention is guaranteed in this way. According to a preferred embodiment of the faces 42 of the adjacent turns 40, a punctual contact of the turns is realized which assures a sufficient force transmission. To guarantee at the same time the mentioned force transmission and the supporting of the flexibility of the sheathed cable according to the invention, the faces are curvilinearly, circularly or angularly formed. Different preferred embodiments are shown in figures 2 to 4. The figures 2 and 4 show the preferred radial forming according to the invention of the faces of the adjacent ring-shaped elements or turns 40 of the support structure 30. A further preferred linear formation according to the invention of the mentioned faces 42 is shown in Fig. 3. Curvy linear or gradual linear formations of the faces 42 are also preferably applied according to the invention as long as they enhance or support the arbitrary run of the sheathed cable and its flexibility as well as the support function to be guaranteed by the cable guiding.

Figure 3 shows a cross section of a spiral shaped turn 40 and the contacting of adjacent faces 42 of these turns 40 at each other. The faces 42 have a circular arc-like shape in this preferred embodiment of the invention wherein the centre of this arc of circle is approximately centrally arranged in comparison to the width e of the cross section of the ring-shaped element 40 or the preferred turns 40 according to the invention. By this shape of the faces 42, an optimal roll-off of adjacent faces at each other is guaranteed in case the cable 10 is installed with arbitrary changes in direction. It is additionally guaranteed that the adjacent ring-shaped elements 40 or the preferred turns 40 according to the invention contact each other in every desired run of the sheathed cable system and, thus, provide a point for force and energy transmission. Furthermore, it is assured by the preferred formation according to the invention of the faces 42 that the adjacent turns 40 do not displace or shift and in this manner jam or block the cable 10 within the support structure 30.

According to a further preferred embodiment of the faces 42 as shown in Figure 4, the centre of the circular arc-like face 42 is preferably positioned near the outer side of the spiral shaped turn 40. Near the outer side denotes in this case an arrangement at the side adjacent to the casing 20. Also this preferred arrangement according to the invention guarantees a supporting of the preferred turns 40 according to the invention at each other in every desired arrangement of the sheathed cable system according to the present invention. Because of this reason, a displacing or shifting of adjacent turns 40 is also prevented in this arrangement by either assuring a roll-off of the faces 42 or a supporting at the most outer edges of the faces 42.

According to the preferred embodiments according to the invention as described in the Figures 3 and 4, the radii R of the faces 42 are larger or equal to the width e of the cross section of the preferred spiral shaped turns 40 according to the invention. The radius R and the width e of the cross section of the spiral shaped turns 40 are also shown in the figures 3 and 4.

A further preferred embodiment of the present invention is shown in Figure 3. Here, a linear formation of the face 42 of the adjacent spiral shaped turns 40 is depicted. The adjacent faces 42 enclose in this case an angle α. Said angle α qualifies a preferred maximum buckling angle of the run of the sheathed cable system which follows from the equation 180°-α. In spite of this indirectly recommended maximum buckling angle, other angular alignments of the sheathed cable system according to the invention are possible. Dependent on the run of the sheathed cable system, either a supporting at the outer edges of the faces 42 or a supporting by means of a plane contact of the opposed faces 42 is achieved in the embodiment according to the invention as shown in Figure 3.

It is furthermore preferred according to the invention to form the spiral shaped turns 40 or the ring shaped elements 40 with a recess H arranged at the side directed to the cable 10. This recess H is exemplary shown in Figures 2 to 4 according to the preferred embodiments of the present invention.

Said recess H preferably comprises according to the invention a cornered configuration as for example trapezoidal, or it has a curvilinear configuration, as for example circular. Preferably according to the invention, the depth of the recess H is up to a maximum of 90% of the half of the width e of the cross section of the spiral shaped turns 40. The extent of the recess H parallel to the side of the spiral shaped turns 40 directed to the casing 20 maximally finishes at the edges of the radial, linear or curvilinear faces 42 of the turns 40. It is also preferred according to the invention to form the recess H with less extent.

The preferred support structure 30 according to the invention having the turns 40 is made of steel or similar resilient materials having high weight. Based on the formation of the recess H, a reduction of the used material is achieved which at the same time realizes a reduction of the weight of the whole sheathed cable system according to the invention. It follows from this weight reduction as a substantial advantage that the own weight of the sheathed cable system is lower compared to known sheathed cable systems. The deformations of the sheathed cable system qualified by the own weight are thus minimized and lower forces act particularly on the faces 42 of the support structure 30 which limit the function of the sheathed cable system. It is also advantageous that less weight is added to the systems in which the sheathed cable system according to the invention is used based on the weight reduction. Thereby, for example the reduction of the fuel consumption is supported in motor vehicles.

A further advantage of the provision of the above mentioned recess H follows in connection with a preferred inner cover element 50 according to the invention arranged between the cable 10 and the support structure 30. This cover element 50 is preferably according to the invention an extruded tube of synthetic resin or similar materials which contribute to the minimization of the friction between the cable 10 and the support structure 30. A further function of the cover element 50 according to the invention consists in the provision of lubricate so that the wear of the cable 10 and/or the support structure 30 is minimized.

According to a first preferred embodiment of the present invention, the inner cover element 50 is formed as an outer coating of the cable 10. According to a second preferred embodiment of the present invention, the inner cover element 50 is formed as a coating of the side of the support structure 30 directed to the cable 10. As long as the cover element 50 is arranged according to the second preferred embodiment, advantages are also generated based on the preferred formation and arrangement of the recess H according to the invention.

As soon as the inner cover element 50 is applied to the inner surface of the support structure 30, a "latching" or "anchoring" of the inner surfaces of the spiral shaped turns having the recess H is carried out in said inner cover element 50. By the engaging of the inner cover element 50 in said recess H, said cover element 50 is thereby fastened. In this manner, the mounting of the inner cover element 50 is only realized by the shape of the recess H wherein no adhesive or other mounting methods are necessary.

More precisely, the mounting is realized either in said recess H or at the projections V limiting the recess H (confer Figs. 2 to 4). The projections V engage said inner cover element 50 so that preferably according to the invention a supporting between said cover element 50 and said inner support structure 30 is realized. Therefore, the recess H and the projections V serve for the weight reduction of the support structure 30 as well as for the mounting of the cover element 50. With no mounting according to the invention of the cover element 50, the same could easily shift and in this manner effect a deadlock of the sheathed cable system.

A further function of the inner cover element 50 consists in supporting or stabilizing the support structure 30 having the preferred spiral shaped turns 40 according to the invention. It follows from this stabilization that shifting, displacing or an off-set of the spiral shaped turns or the ring-shaped elements 42 is prevented. Therefore, said inner cover element 50 provides a safety for the case that the ring-shaped elements or the preferred spiral shaped turns 40 according to the invention also contact each other at their adjacent faces 42 and, therefore, enable an optimal force and energy transmission.

According to a further preferred embodiment, the support structure 30 comprises an outer coating formed by the casing 20. This casing 20 is preferably according to the invention made of a synthetic resin or similar materials resistant against chemical as well as physical outer attacks. Beside the protection against outer influences, said casing 20 also contributes to the stabilization of the support structure 30 and, thus, to the stabilization of said preferred turns 40 according to the invention.

## Claims

1. A sheathed cable system, in particular a bowden cable system, comprising:
a. a cable (10);
b. a cable guiding having a support structure (30) for receiving said cable (10); wherein
c. said support structure (30) comprises adjacent ring-shaped elements (40) wherein the faces (42) of which directly contact each to transmit forces in axial direction of the cable (10).

2. The sheathed cable system according to claim 1, wherein an inner cover element (50) is arranged between said cable (10) and said support structure (30) to enhance the compactness of the sheathed cable system.

3. The sheathed cable system according to claim 2, wherein said cover element (50) is formed by an extruded tube of synthetic resin or similar materials within the support structure or by an outer coating of said cable (10).

4. The sheathed cable system according to one of the preceding claims, wherein at least one of said ring-shaped elements (40) comprises at its side directed to said cable (10) a recess (H) along the inner circumference.

5. The sheathed cable system according to claim 4, wherein said recess (H) comprises a cornered or curvilinear cross section.

6. The sheathed cable system according to one of the preceding claims, wherein the faces (42) of the adjacent ring-shaped elements (40) comprise a curvilinear or a linear shape angularly aligned to each other in order to effectively contact each other.

7. The sheathed cable system according to one of the preceding claims, wherein said ring shaped elements (40) are spiral shaped turns made of resilient material.

8. The sheathed cable system according to one of the preceding claims wherein said cable guiding further comprises an outer casing (20) adjacent to the outer side of the support structure (30).
